# EUROPEAN PATENT SPECIFICATION

(11) **EP 4 369 263 B1**
(45) Date of publication and mention of the grant of the patent: **02.09.2026**
(21) Application number: 23207027.6
(22) Date of filing: 31.10.2023
(51) Int. Cl.: G06Q 10/06, G06Q 50/04

(54) **METHOD AND APPARATUS FOR MONITORING PRODUCT CARBON FOOTPRINT**
VERFAHREN UND VORRICHTUNG ZUR ÜBERWACHUNG DES PRODUKTKOHLENSTOFFFUSSABDRUCKS
PROCÉDÉ ET APPAREIL DE SURVEILLANCE DE L'EMPREINTE CARBONE D'UN PRODUIT

(30) Priority: 10.11.2022 DE 102022211935
(43) Date of publication of application: 15.05.2024
(73) Proprietor: ATS Automation Tooling Systems GmbH, 85551 Heimstetten (DE)
(72) Inventor: BLAIR DE VERTEUIL, Daniel, Cambridge, ON N1P 1G1 (CA); KLEINIKKINK, Stanley Wellington, Kitchener, ON N2A 1L1 (CA)
(74) Representative: Bardehle Pagenberg Partnerschaft mbB Patentanwälte Rechtsanwälte

(56) References cited:
- JP-A- 2010 191 832
- US-A1- 2013 151 303
- US-A1- 2022 108 327

## Description

### TECHNICAL FIELD

The present application relates to the field of automation systems. More particularly, the present application relates to techniques for monitoring product carbon footprint (PCF) for products assembled by automation systems.

### BACKGROUND

A carbon footprint is the total greenhouse gas (GHG) emissions caused by an individual, event, organization, service, place or product, expressed as carbon dioxide equivalent (CO₂e). Greenhouse gases (GHGs) are gases that increase the temperature of the Earth due to their absorption of infrared radiation. Although some emissions are natural, the rate of which they are being produced has increased because of humans. These gases are emitted from fossil fuel usage in electricity, in heat and transportation, as well as being emitted as byproducts of manufacturing.

In most cases, the total carbon footprint cannot be calculated exactly because of inadequate knowledge of data about the complex interactions between contributing processes, including the influence of natural processes that store or release carbon dioxide. However, once the size of a carbon footprint is known, a strategy can be devised to reduce it.

The following documents represent relevant prior art with respect to the present invention: US2022/108327A1 discloses a system comprising a processor for gathering process data, raw material carbon footprint data, and energy consumption data for production steps from raw materials to a finished product, and determining a carbon footprint based on the gathered information. US2013/151303A1 discloses a manufacturing system in which carbon equivalent base attributes for component units and a carbon equivalent production attribute for a manufacturing process are defined and used to compute and display a carbon footprint value of an assembled product. JP2010-191832A discloses a management system that records energy usage, material consumption, facility operation data, and production results, calculates greenhouse gas emissions based on these data, and allocates the calculated emissions to individual product units or manufacturing lots.

Therefore, one goal of the present disclosure is to provide techniques to monitor carbon footprint during manufacturing processes, in particular during assembly processes. Furthermore, it is also a goal of the present disclosure to provide real-time feedback of the product carbon footprint (PCF), so that impact of reduction measures and their consequences on the PCF can be evaluated efficiently.

### SUMMARY

The invention is defined in the appended independent claims. Preferred embodiments are subject-matter of the dependent claims.

The following summarizes some aspects of the present disclosure to provide a basic understanding of the discussed technology. This summary is not an extensive overview of all contemplated features of the disclosure and is intended neither to identify key or critical elements of all aspects of the disclosure nor to delineate the scope of any or all aspects of the disclosure. Its sole purpose is to present some concepts of one or more aspects of the disclosure in summary form as a prelude to the more detailed description that is presented later.

For example, in an aspect of the disclosure, a method performed at a monitoring system, for determining carbon footprint for one or more products assembled by an assembly unit, comprises: receiving measurement data generated by at least one product counter sensor configured to detect a number of products assembled by the assembly unit over time; determining a number of assembled products in a period of time, based on the measurement data generated by the at least one product counter sensor; receiving measurement data generated by at least one energy supply sensor configured to measure an amount of energy being supplied to the assembly unit over time; determining an amount of supplied energy in the period of time, based on the measurement data generated by the at least one energy supply sensor; obtaining energy carbon footprint information representing an amount of greenhouse gas released into the atmosphere for generating the amount of energy being supplied to the assembly unit; estimating an amount of greenhouse gas released into the atmosphere for generating the amount of supplied energy in the period of time, based on the energy carbon footprint information; and determining a carbon footprint per assembled product and/or an aggregated carbon footprint for all the assembled products in the period of time, based at least on the number of assembled products in the period of time and on the amount of greenhouse gas released into the atmosphere for generating the amount of supplied energy in the period of time.

In an additional aspect of the disclosure, a monitoring system, for determining carbon footprint for one or more products assembled by an assembly unit, comprises: means for receiving measurement data generated by at least one product counter sensor configured to detect a number of products assembled by the assembly unit over time; means for determining a number of assembled products in a period of time, based on the measurement data generated by the at least one product counter sensor; means for receiving measurement data generated by at least one energy supply sensor configured to measure an amount of energy being supplied to the assembly unit over time; means for determining an amount of supplied energy in the period of time, based on the measurement data generated by the at least one energy supply sensor; means for obtaining energy carbon footprint information representing an amount of greenhouse gas released into the atmosphere for generating the amount of energy being supplied to the assembly unit; means for estimating an amount of greenhouse gas released into the atmosphere for generating the amount of supplied energy in the period of time, based on the energy carbon footprint information; and means for determining a carbon footprint per assembled product and/or an aggregated carbon footprint for all the assembled products in the period of time, based at least on the number of assembled products in the period of time and on the amount of greenhouse gas released into the atmosphere for generating the amount of supplied energy in the period of time.

In an additional aspect of the disclosure, a computer program comprises instructions which, when the program is executed by a computer, cause the computer to carry out a method according to some aspects of the present disclosure.

Other aspects, features, and aspects will become apparent to those of ordinary skill in the art, upon reviewing the following description of specific, exemplary aspects in conjunction with the accompanying figures. While features may be discussed relative to certain aspects and figures below, all aspects can include one or more of the advantageous features discussed herein. In other words, while one or more aspects may be discussed as having certain advantageous features, one or more of such features may also be used in accordance with the various aspects discussed herein. In similar fashion, while exemplary aspects may be discussed below as device, system, or method aspects it should be understood that such exemplary aspects can be implemented in various devices, systems, and methods.

### BRIEF DESCRIPTION OF THE DRAWINGS

**FIG. 1** is a schematic view of an example of an assembly plant.
**FIG. 2** illustrates a flow diagram of a method for determining carbon footprint for one or more products assembled by an assembly unit according to some aspects of the disclosure.
**FIG. 3** illustrates an example of displaying real-time product carbon footprint results according to some aspects of the disclosure.
**FIG. 4** illustrates an example of displaying real-time energy monitoring results according to some aspects of the disclosure.
**FIG. 5** provides a schematic view of a monitoring system according to some aspects of the disclosure.

To facilitate understanding, identical reference numerals have been used, where possible, to designate identical elements that are common to the figures. It is contemplated that elements disclosed in one aspect may be beneficially utilized on other aspects without specific recitation.

### DETAILED DESCRIPTION

The detailed description set forth below, in connection with the appended drawings, is intended as a description of various configurations and is not intended to represent the only configurations in which the concepts described herein may be practiced. The detailed description includes specific details for the purpose of providing a thorough understanding of the various concepts. However, it will be apparent to those skilled in the art that these concepts may be practiced without these specific details. In some instances, well-known structures and components are shown in block diagram form in order to avoid obscuring such concepts.

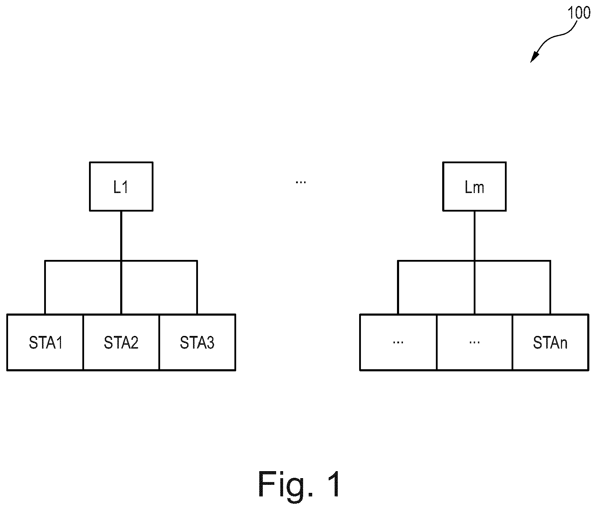

**Fig. 1** is a schematic view of an example of an assembly plant 100. The assembly plant 100 comprises multiple assembly lines L1, ..., Lm. Each assembly line comprises multiple assembly stations. As shown as an example, assembly line L1 has three assembly stations STA1, STA2, and STA3. The number of assembly lines and the number of assembly stations per assembly lines can vary from plant to plant. Further, the assembly lines can have different number of assembly stations.

In an aspect, the assembly plant 100 is designed to assemble medical devices, such as auto-injectors, syringes, inhalers, Intravenous Infusion (IV) sets, etc.

Each station STA includes one or more automation tools for performing various operations and/or tasks of the respective station STA. Each station STA further includes one or more energy inlets. Moreover, the energy to be supplied to the stations can be electrical energy, pneumatic energy, and/or any other kinds of energy such as energy carried by gas, wind and/or water.

The present disclosure provides techniques to monitor product carbon footprint (PCF). Furthermore, the present disclosure provides techniques to present real-time monitoring results to a user, so that PCF optimization measurements can be efficiently evaluated.

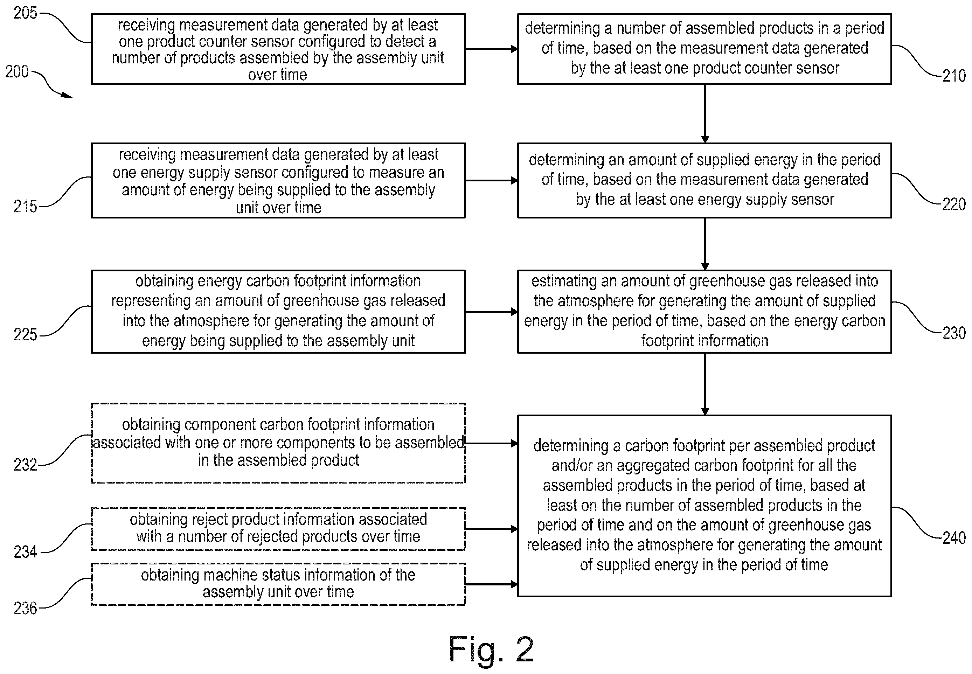

**Fig. 2** illustrates a flow diagram of a method 200 for determining carbon footprint for one or more products assembled by an assembly unit according to some aspects of the disclosure. Steps of the method 200 can be executed by a monitoring system. As illustrated, the method 200 includes a number of enumerated steps, but aspects of the method 200 may include additional steps before, after, and in between the enumerated steps.

For example, the monitoring system may be configured to collect real-time measurement data and machine status reports associated with the stations STA1, ..., STAn in the assembly plant 100.

At step 205, the monitoring system receives measurement data generated by at least one product counter sensor configured to detect a number of products assembled by the assembly unit over time.

In an aspect, the at least one product counter sensor may comprise one or more physical sensors, one or more virtual sensors or any combination thereof. For example, the physical sensors may comprise a light sensor, a photoelectric barrier, a pressure sensor, a flow sensor (e.g., to test the functionality of an assembled product in terms of whether a certain amount of air or other medium can flow through), a temperature sensor, a scale (e.g., to check whether a correct quantity has been filled in), a displacement sensor, and/or a vision/camera system. A vision/camera system may be configured for displacement measurements, surface evaluation, component quality inspection (e.g., bent, scratched, protruding burr, presence check, etc.). Each of the one or more virtual sensors may be, for example, derived from the processing of any of the real-time measurement data and machine status reports collected by the monitoring system.

In an aspect, the at least one product counter sensor may comprise a good part counter sensor and a reject counter sensor. The good part counter sensor may be configured to count a number of products that are successfully assembled. The reject counter sensor may be configured to count a number of products that are not successfully assembled (i.e., defective and/or abandoned products). The reject counter sensor may be additionally configured to detect a stage of assembly associated with each not successfully assembled product. The stage of assembly associated with each not successfully assembled product provides an indication of a stage in a multi-stage (e.g., multiple assembly stations) assembly process at which the not successfully assembled product was rejected and/or abandoned.

For example, the assembly unit may be an assembly station (e.g., the station STA1, ..., or STAn in Fig. 1), an assembly line comprising multiple assembly stations (e.g., the assembly line L1 or Lm in Fig. 1), or an assembly factory comprising multiple assembly lines (e.g., the assembly plant 100 of Fig. 1).

In some aspects, the monitoring system may be adapted to record corresponding timestamps when a product being assembled enters and leaves each station along the assembly line. In some implementations, the product being assembled may be held by a workpiece carrier throughout the whole assembly process. The workpiece carrier may be moved from one station to the next station manually and/or with the help of a conveyer belt, a gripper, a linear unit, etc. A timestamp of the product entering a station and a timestamp of the product leaving the station can be recorded by recording the time when the workpiece carrier enters and leaves the station, correspondingly. In some implementations, a workpiece carrier may be used to hold multiple products being assembled.

The timestamp information for all the stations of an assembly line can be used to determine an amount of products assembled during any time period.

Preferably, each workpiece carrier may be assigned a unique identifier. All information recorded in association with a workpiece carrier may be recorded together with the corresponding workpiece carrier identifier.

At step 210, the monitoring system determines a number of assembled products in a period of time, based on the measurement data generated by the at least one product counter sensor.

At step 215, the monitoring system receives measurement data generated by at least one energy supply sensor configured to measure an amount of energy being supplied to the assembly unit over time.

At step 220, the monitoring system determines an amount of supplied energy in the period of time, based on the measurement data generated by the at least one energy supply sensor.

At step 225, the monitoring system obtains energy carbon footprint information representing an amount of greenhouse gas released into the atmosphere for generating the amount of energy being supplied to the assembly unit.

In an aspect, the energy carbon footprint information may comprise a default parameter to convert an amount of supplied energy into a respective carbon dioxide equivalent (CO₂e). There can also be different default parameters dependent on types and/or sources of supplied energy. For example, a default parameter can be used to convert an amount of energy represented by Kwh to Metric tons CO2e.

In an aspect, the energy carbon footprint information may be based on user input. For example, the user can input a parameter to convert an amount of supplied energy into a respective amount of greenhouse gas depending on the type and/or source of the supplied energy.

At step 230, the monitoring system estimates an amount of greenhouse gas released into the atmosphere for generating the amount of supplied energy in the period of time, based on the energy carbon footprint information.

At step 240, the monitoring system determines a carbon footprint per assembled product and/or an aggregated carbon footprint for all the assembled products in the period of time, based at least on the number of assembled products in the period of time and on the amount of greenhouse gas released into the atmosphere for generating the amount of supplied energy in the period of time.

In a further aspect, the monitoring system may determine an amount of supplied energy per assembled product, based on the number of assembled products and the amount of supplied energy in the period of time.

Furthermore, the monitoring system may perform optional steps 232, 234, and/or 236.

At step 232, the monitoring system obtains component carbon footprint information associated with one or more components to be assembled in the assembled product. The assembled products may comprise successfully assembled products and/or not successfully assembled products. The components in a not successfully assembled product may be further based on the associated stage of assembly.

In a further aspect, the step 240 may be further based on the component carbon footprint information associated with components in the assembled products.

At step 234, the monitoring system obtains reject product information associated with a number of rejected products over time. A rejected product may comprise a same amount of, or fewer, components consumed in an assembled product.

In some aspects, a rejected product may be a product that comprises one or more missing or incorrectly installed components, which can be detected via one or more physical sensors disclosed herein.

In some aspects, a rejected product may be associated with an incorrect assembly process performed at a station (e.g., as described in association with Fig. 1). For example, an assembly process may require a certain force-displacement limit. A load sensor and a displacement sensor may be installed at the station for measuring the relevant parameters. Preferably, an external device may be connected to the sensors for recording the relevant parameters (with timestamps) during the process. If at the end of the process, the force-displacement is within a certain limit, the assembled parts produced by this process will be marked as good parts. Otherwise, the process is considered incorrect, and the assembled parts produced by the incorrect process will be marked as rejected parts.

In some aspects, a rejected product may be associated with an amount of time for curing an adhesive applied to the product. For instance, when an adhesive is applied during one process, then all further processes up to curing must take place within a time window to ensure a desired quality. To detect such time duration needed for curing a respective product, a timestamp when adhesive is applied and a timestamp when curing is finished can be recorded. Then, a difference between the two timestamps can be used to determine whether the duration is within an allowed time window. If yes, the product is a good product. Otherwise, the product is a rejected product.

In some aspects, a rejected product may be associated with a test performed at the end of assembly. If the assembled product passes the test, it is a good product. Otherwise, the product is a rejected product. The test can be implemented by a special test apparatus/system, which e.g., carry a complete function test of an electronic unit of the assembled product.

In some aspects, a rejected product may be detected and removed from the assembly line during assembly (e.g., at the station where the reject criterion has met) or after the test at the final station. Preferably, each time a reject event takes place, a time stamp may be recorded. Further information related to each reject event may be also recorded, such as a reject event code (e.g., each code representing a reject ground), equipment name (e.g., to identify at which station the reject event took place), description (e.g, to provide more details about the reject ground), carrier ID (i.e., identifier of the workpiece carrier), nest ID (when more than one products are transported by the workpiece carrier), etc. The information related to each reject event may be used to determine at which assembly stage the reject event took place and which components are comprised in each rejected product.

In a further aspect, the step 240 may be further based on the component carbon footprint information associated with components in the rejected products. Different rejected products may be rejected at different assembly stages and comprise different amounts of components, which can be individually determined based on the information associated with the reject events.

In a further aspect, the information on the carbon footprint of the one or more components may be based on user input.

At step 236, the monitoring system obtains machine status information of the assembly unit over time. The machine status information may comprise an "idle" state, a "running" state, and/or other states of the assembly unit. The assembly unit may operate in the "running" state in which assembled products are produced or the "idle" state in which no assembled products are produced. In the "idle" state energy may still be supplied to the assembly unit. Thus, the energy being supplied to the assembly unit over time may comprise supplied energy during "idle" status and supplied energy during "running" status.

In a further aspect, the step 240 may be based on an aggregate supplied energy for both the "idle" status and the "running" state.

In a further aspect, the monitoring system may estimate an amount of greenhouse gas released during the "idle" state based on the supplied energy for the "idle" state.

In a further aspect, the monitoring system may display, on a display, the carbon footprint per assembled product and/or the aggregated carbon footprint for all the assembled products in the period of time, upon determining the carbon footprint per assembled product and/or the aggregated carbon footprint for all the assembled products in the period of time.

In a further aspect, the monitoring system may display, on a display, the carbon footprint per assembled product and/or the aggregated carbon footprint for all the assembled products in the period of time for each machine state, upon determining the carbon footprint per assembled product and/or the aggregated carbon footprint for all the assembled products in the period of time.

In a further aspect, the monitoring system may display an impact of a machine state on the carbon footprint per assembled product and/or the aggregated carbon footprint for all the assembled products in the period of time.

In a further aspect, the monitoring system may obtain product process parameter information over time. The process parameter information may comprise values of machine parameters related to the machine(s) in the assembly unit.

In a further aspect, the monitoring system may further display an impact of the machine parameters on the carbon footprint per assembled product and/or the aggregated carbon footprint for all the assembled products in the period of time.

In a further aspect, the method 200 may be performed for multiple periods of time and the monitoring system may display respective product carbon footprint (PCF) information upon a respective period of time has elapsed. In this way, the PCF can be monitored in real time. For example, the user can adjust the energy carbon footprint information and/or carbon footprint of one or more components to be assembled and evaluate the impact of the different parameters in real-time.

In a further aspect, the monitoring system may display, on the display, a graph of the carbon footprints per assembled product and/or the aggregated carbon footprints for all the assembled products in the multiple periods of time.

In a further aspect, the monitoring system may display, on the display, a trend line on the graph of the carbon footprints per assembled product and/or the aggregated carbon footprints for all the assembled products in the multiple periods of time.

In a further aspect, the assembly unit may be supplied with energy from two or more inlets. Step 215 may comprise receiving data generated by corresponding two or more energy supply sensors configured to measure an amount of energy being supplied by each of the inlets to the assembly unit over time, and step 220 may be based on the measurement data generated by each of the energy supply sensors.

In a further aspect, the energy being supplied may comprise two or more different types of energy.

In a further aspect, step 230 may comprise estimating, per energy inlet, an amount of greenhouse gas released into the atmosphere for generating the amount of supplied energy in the period of time.

In a further aspect, the determination of the carbon footprint per assembled product and/or the aggregated carbon footprint for all the assembled products in the period of time may be based on the amount of greenhouse gas released into the atmosphere for generating the amount of supplied energy in the period of time for each of the energy inlets.

In a further aspect, the monitoring system may display, on a display, the carbon footprint per product and/or aggregated carbon footprint per energy inlet and/or per type of energy.

In a further aspect, the energy supplied to the assembly unit may comprise electrical energy and/or pneumatic energy.

In a further aspect, the energy supplied to the assembly unit may be generated by different sources such as wind, water, and/or solar.

In a further aspect, a length of the period of time may be based on user input. By adjusting the length of the period of time, the user can adjust the granularity of the monitoring results.

In a further aspect, the monitoring system may output product carbon footprint information to a second system. The second system may further process the product carbon footprint information for the purposes of attributing, allocating or creating a corresponding carbon footprint offset.

In a further aspect, the monitoring system may be a shop floor management system.

In addition, the present disclosure provides a graphic user interface (GUI) to display the results from the monitoring system and/or to obtain user input(s).

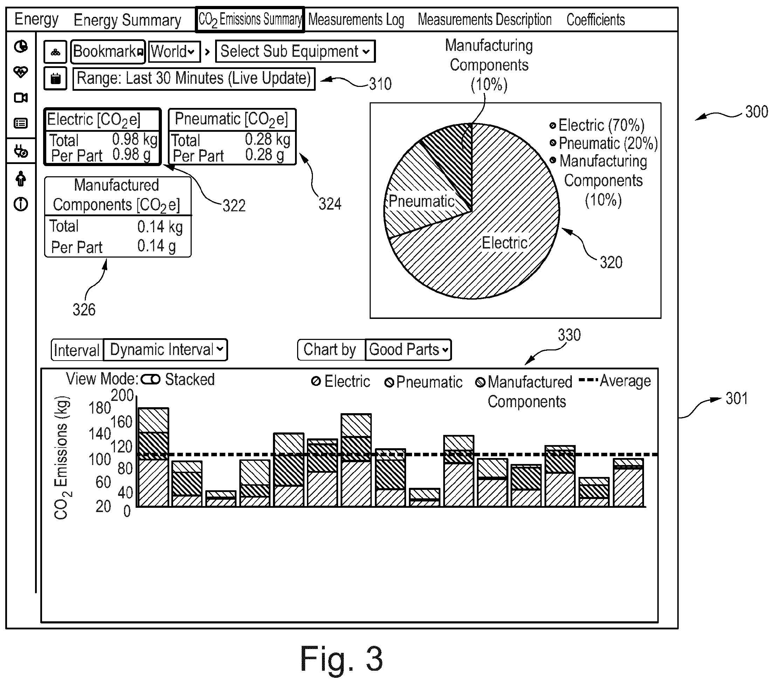

**Fig. 3** illustrates an example GUI 300 displaying real-time product carbon footprint results according to some aspects of the disclosure. The GUI 300 may provide a human machine interface (HMI) for the user to interact with the display.

As shown in Fig. 3, the GUI 300 provides a view 301 displaying real-time product carbon footprint results. The view 301 includes a field 310 showing a time duration for which the monitoring results are being displayed. The field 310 may be a drop-down menu allowing the user to choose a preferred time duration, e.g., 15 minutes, 30 minutes, 45 minutes, etc. In the example shown in Fig. 3, the time duration is set as 30 minutes. Furthermore, the filed 310 may be configured so that, when the user clicks on it, a calendar and/or input fields are shown to allow a user to select any starting time and any end time to define a time period, for which corresponding monitoring results can be shown in the view 301.

Further, the view 301 includes fields 322, 324, 326 showing different categories of carbon footprint. In the example shown in Fig. 3, field 322 shows carbon footprint information associated with supplied electric energy for the selected time duration for the assembly unit being monitored. The carbon footprint information is illustrated as total carbon dioxide equivalent (CO₂e) for all the parts assembled during the time duration, and CO₂e per part. Field 324 shows analogously carbon footprint information associated with supplied pneumatic energy for the selected time duration for the assembly unit being monitored. Field 326 shows analogously carbon footprint information associated with the components being assembled for the selected time duration for the assembly unit being monitored.

Further, the view 301 includes a pie diagram 320 showing different percentages of the different categories of carbon footprint.

In a further aspect, the categories of carbon footprint may be further divided based on different energy inlets and the view 301 may be consequently adjusted.

Further, the view 301 includes a histogram 330 showing different percentages of the different categories of carbon footprint along time. In addition, a line representing an average PCF for the selected time duration is shown on the histogram 330. Furthermore, timestamp information (not shown) may be added underneath the bins in the histogram 330 to indicate time information related to each of the bins.

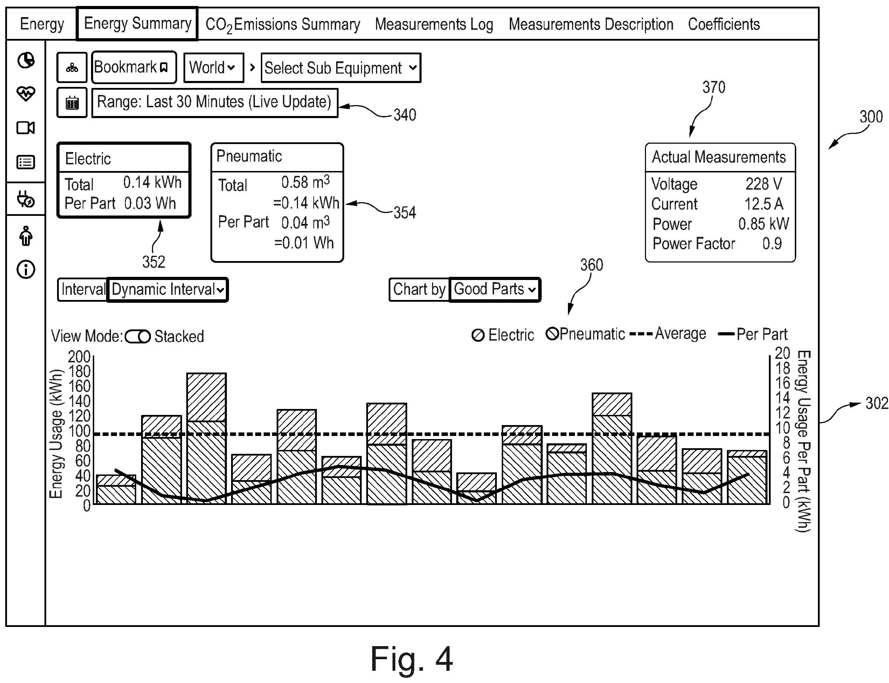

**Fig. 4** illustrates an example using the GUI 300 to display real-time energy monitoring results according to some aspects of the disclosure.

As shown in Fig. 4, the GUI 300 provides a view 302 displaying real-time energy monitoring results. The view 302 includes a field 340 showing a time duration for which the monitoring results are being displayed. The field 340 works similarly as the field 310 of view 301. In the example shown in Fig. 4, the time duration is set as 30 minutes.

Further, the view 302 includes fields 352, 354 showing different categories of suppled energy. In the example shown in Fig. 4, field 352 shows information associated with supplied electric energy for the selected time duration for the assembly unit being monitored. This information is illustrated as total electric energy supplied for all the parts assembled during the time duration, and electric energy per part. Field 354 shows analogously information associated with supplied pneumatic energy for the selected time duration for the assembly unit being monitored. As can be seen, the pneumatic energy is shown by different units. The first unit m³ represents a direct measurement result of the supplied pneumatic energy. The second unit kWh represents an equivalent electrical energy needed to produce the respective amount of pneumatic energy.

For example, in another view (not shown) of the GUI 300, the user can input a coefficient used to convert volume information of supplied compressed gas into equivalent electrical energy needed to produce a respective amount of compressed gas. Furthermore, as the coefficient can change in time the user may store a new coefficient at each time the coefficient has changed. The previous coefficients may be stored together with a timestamp and the historical coefficients may be used in the calculation of a sum of CO₂e over a time period.

Further, the view 302 includes a histogram 360 showing different percentages of the different categories of suppled energy along time. In addition, a line representing an average supplied energy for the total amount of products and a line representing an average supplied energy per product for the selected time duration is shown on the histogram 360. Furthermore, timestamp information (not shown) may be added underneath the bins in the histogram 360 to indicate time information related to each of the bins.

Further, the view 302 includes live status monitoring reports 370 of the assembly unit.

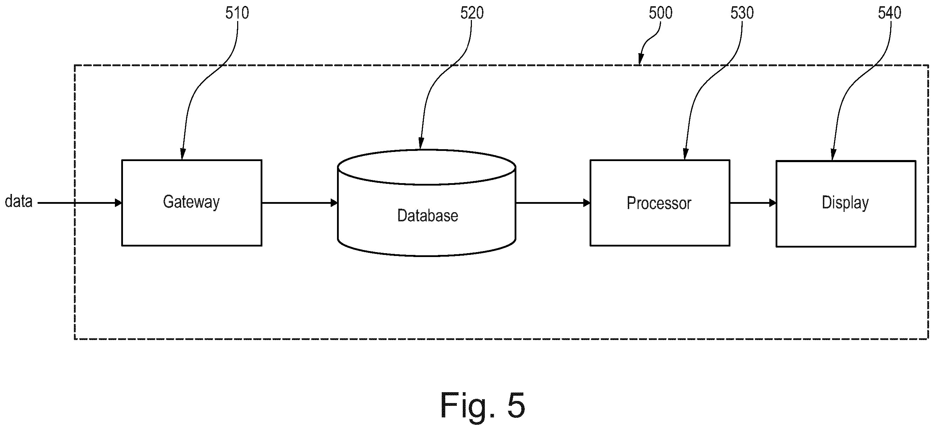

**Fig. 5** provides a schematic view of a monitoring system 500 according to some aspects of the disclosure.

As shown in Fig. 5, the monitoring system 500 has a gateway 510, a database 520, a processor 530, and a display 540.

The gateway 510 may be configured to collect measurement data disclosed with reference to Fig. 2. For example, the gateway 510 may be configured to collect measurement data obtained by one or more product counter sensors and/or one or more energy supply sensors. Furthermore, for example, the gateway 510 may be configured to collect data associated with any station STA1,..., STAn in the assembly plant 100 of Fig. 1. Some of the data may be collected by a connectivity platform, such as KEPServerEX, and forwarded to the gateway 510. The data collected by the gateway 510 may be represented by an Open Platform Communications United Architecture (OPC UA) and/or as data objects.

The database 520 may be configured to store the data collected by the gateway 510. Communication between the gateway 510 and the database 520 may be based on a HTTPS/JSON protocol.

An additional component (not shown) may be added between the gateway 510 and the database 520 to add meta data, and/or pre-process the data collected by the gateway 510 (e.g., manipulate, filter, parse, etc.), before the data is stored in the database 520. Communication between the gateway 510 and the additional component may be based on a MQTT protocol. Communication between the additional component and the database 520 may be based on a HTTPS protocol.

The processor 530 may be configured to perform a method according to some aspects of the disclosure. The processor 530 may utilize an Application Programming Interface (API) to process the data stored in the database 520.

The display 540 may be configured to display monitoring results according to some aspects of the disclosure. For example, the display 540 may be configured to display a GUI 300 in accordance with Fig. 3 and Fig. 4.

In a further aspect, the display 540 may display one or more dashboards to for the purposes of aggregate, annotate, alter, authenticate, etc.

It should be apparent that the teachings herein may be embodied in a wide variety of forms and that any specific structure, function, or both being disclosed herein is merely representative and not limiting. Based on the teachings herein one of an ordinary level of skill in the art should appreciate that an aspect disclosed herein may be implemented independently of any other aspects and that two or more of these aspects may be combined in various ways. For example, an apparatus may be implemented or a method may be practiced using any number of the aspects set forth herein. In addition, such an apparatus may be implemented or such a method may be practiced using other structure, functionality, or structure and functionality in addition to or other than one or more of the aspects set forth herein. For example, a method may be implemented as part of a system, device, apparatus, and/or as instructions stored on a computer readable medium for execution on a processor or computer. Furthermore, an aspect may comprise at least one element of a claim.

The various illustrative blocks and modules described in connection with the disclosure herein may be implemented or performed with a general-purpose processor, a DSP, an ASIC, an FPGA or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices (e.g., a combination of a DSP and a microprocessor, multiple microprocessors, one or more microprocessors in conjunction with a DSP core, or any other such configuration).

The functions described herein may be implemented in hardware, software executed by a processor, firmware, or any combination thereof. If implemented in software executed by a processor, the functions may be stored on or transmitted over as one or more instructions or code on a computer-readable medium. Other examples and implementations are within the scope of the disclosure and appended claims. For example, due to the nature of software, functions described above can be implemented using software executed by a processor, hardware, firmware, hardwiring, or combinations of any of these. Features implementing functions may also be physically located at various positions, including being distributed such that portions of functions are implemented at different physical locations.

## Claims

1. A method performed at a monitoring system, for determining carbon footprint for one or more products assembled by an assembly unit, the method comprising:
receiving (205) measurement data generated by at least one product counter sensor configured to detect a number of products assembled by the assembly unit over time;
determining (210) a number of assembled products in a period of time, based on the measurement data generated by the at least one product counter sensor;
receiving (215) measurement data generated by at least one energy supply sensor configured to measure an amount of energy being supplied to the assembly unit over time;
determining (220) an amount of supplied energy in the period of time, based on the measurement data generated by the at least one energy supply sensor;
obtaining (225) energy carbon footprint information representing an amount of greenhouse gas released into the atmosphere for generating the amount of energy being supplied to the assembly unit;
estimating (230) an amount of greenhouse gas released into the atmosphere for generating the amount of supplied energy in the period of time, based on the energy carbon footprint information; and
determining (240) a carbon footprint per assembled product and/or an aggregated carbon footprint for all the assembled products in the period of time, based at least on the number of assembled products in the period of time and on the amount of greenhouse gas released into the atmosphere for generating the amount of supplied energy in the period of time;
and the method further comprising
obtaining (234) reject product information associated with a number of rejected products over time, wherein the determination of the carbon footprint per assembled product and/or the aggregated carbon footprint for all the assembled products in the period of time is further based on the component carbon footprint information associated with components in the rejected products.

2. The method of the preceding claim, wherein the assembly unit is an assembly station, an assembly line comprising multiple assembly stations, or an assembly factory comprising multiple assembly lines.

3. The method of any of the preceding claims, further comprising:
obtaining (232) component carbon footprint information associated with one or more components to be assembled in the assembled product;
wherein the determination of the carbon footprint per assembled product and/or the aggregated carbon footprint for all the assembled products in the period of time is further based on the component carbon footprint information associated with components in the assembled products.

4. The method of any of the preceding claims, further comprising:
upon determining the carbon footprint per assembled product and/or the aggregated carbon footprint for all the assembled products in the period of time, displaying, on a display, the carbon footprint per assembled product and/or the aggregated carbon footprint for all the assembled products in the period of time.

5. The method of any of the preceding claims, further comprising:
for each of multiple periods of time, performing the following steps upon a respective period of time has elapsed:
determining a number of assembled products in the respective period of time, based on the measurement data generated by the at least one product counter sensor;
determining an amount of supplied energy in the respective period of time, based on the measurement data generated by the at least one energy supply sensor;
estimating an amount of greenhouse gas released into the atmosphere for generating the amount of supplied energy in the respective period of time, based on the energy carbon footprint information;
determining a carbon footprint per assembled product and/or an aggregated carbon footprint for all the assembled products in the respective period of time, based at least on the number of assembled products in the respective period of time and on the amount of greenhouse gas released into the atmosphere for generating the amount of supplied energy in the respective period of time; and
displaying, on a display, the carbon footprint per assembled product and/or the aggregated carbon footprint for all the assembled products in the respective period of time.

6. The method of the preceding claim, further comprising
displaying, on the display, a graph of the carbon footprints per assembled product and/or the aggregated carbon footprints for all the assembled products in the multiple periods of time.

7. A monitoring system for determining carbon footprint for one or more products assembled by an assembly unit, the system comprising:
means for receiving measurement data generated by at least one product counter sensor configured to detect a number of products assembled by the assembly unit over time;
means for determining a number of assembled products in a period of time, based on the measurement data generated by the at least one product counter sensor;
means for receiving measurement data generated by at least one energy supply sensor configured to measure an amount of energy being supplied to the assembly unit over time;
means for determining an amount of supplied energy in the period of time, based on the measurement data generated by the at least one energy supply sensor;
means for obtaining energy carbon footprint information representing an amount of greenhouse gas released into the atmosphere for generating the amount of energy being supplied to the assembly unit;
means for estimating an amount of greenhouse gas released into the atmosphere for generating the amount of supplied energy in the period of time, based on the energy carbon footprint information; and
means for determining a carbon footprint per assembled product and/or an aggregated carbon footprint for all the assembled products in the period of time, based at least on the number of assembled products in the period of time and on the amount of greenhouse gas released into the atmosphere for generating the amount of supplied energy in the period of time;
and the monitoring system further comprising
means for obtaining reject product information associated with a number of rejected products over time, wherein the determination of the carbon footprint per assembled product and/or the aggregated carbon footprint for all the assembled products in the period of time is further based on the component carbon footprint information associated with components in the rejected products.

8. The monitoring system of the preceding claim, wherein the assembly unit is an assembly station, an assembly line comprising multiple assembly stations, or an assembly factory comprising multiple assembly lines.

9. The monitoring system of claim 7 or 8, further comprising:
means for obtaining component carbon footprint information associated with one or more components to be assembled in the assembled product;
wherein the determination of the carbon footprint per assembled product and/or the aggregated carbon footprint for all the assembled products in the period of time is further based on the component carbon footprint information associated with components in the assembled products.

10. The monitoring system of any of claims 7 to 9, further comprising:
means for displaying, on a display, the carbon footprint per assembled product and/or the aggregated carbon footprint for all the assembled products in the period of time, upon determining the carbon footprint per assembled product and/or the aggregated carbon footprint for all the assembled products in the period of time.

11. A computer program comprising instructions which, when the program is executed by a computer, cause the computer to carry out the method of any one of claims 1 to 6.

## Patentansprüche

1. Verfahren, das an einem Überwachungssystem durchgeführt wird, zum Bestimmen eines CO2-Fußabdrucks für ein oder mehrere Produkte, die durch eine Montageeinheit zusammengefügt werden, wobei das Verfahren Folgendes umfasst:
Empfangen (205) von Messdaten, die durch mindestens einen Produktzählersensor erzeugt werden, der konfiguriert ist, eine Anzahl von Produkten, die durch die Montageeinheit zusammengefügt werden, über die Zeit zu erfassen;
Bestimmen (210) einer Anzahl von zusammengefügten Produkten in einem Zeitraum basierend auf den Messdaten, die durch den mindestens einen Produktzählersensor erzeugt werden;
Empfangen (215) von Messdaten, die durch mindestens einen Energieversorgungssensor erzeugt werden, der konfiguriert ist, eine Energiemenge zu messen, die der Montageeinheit über die Zeit zugeführt wird;
Bestimmen (220) einer zugeführten Energiemenge in dem Zeitraum basierend auf den Messdaten, die durch den mindestens einen Energieversorgungssensor erzeugt werden;
Erhalten (225) von Energie-CO2-Fußabdruckinformation, die eine Menge an Treibhausgas darstellen, das in die Atmosphäre abgegeben wird, um die Energiemenge zu erzeugen, die der Montageeinheit zugeführt wird;
Schätzen (230) einer Menge an Treibhausgas, das in die Atmosphäre abgegeben wird, um die zugeführte Energiemenge in dem Zeitraum basierend auf der Energie-CO2-Fußabdruckinformation zu erzeugen; und
Bestimmen (240) eines CO2-Fußabdrucks pro zusammengefügtem Produkt und/oder eines aggregierten CO2-Fußabdrucks für alle zusammengefügten Produkte in dem Zeitraum basierend mindestens auf der Anzahl von zusammengefügten Produkten in dem Zeitraum und auf der Menge an Treibhausgas, das in die Atmosphäre abgegeben wird, um die zugeführte Energiemenge in dem Zeitraum zu erzeugen;
und wobei das Verfahren ferner Folgendes umfasst:
Erhalten (234) von Ausschussproduktinformation, die mit einer Anzahl von Ausschussprodukten über die Zeit assoziiert ist, wobei die Bestimmung des CO2-Fußabdrucks pro zusammengefügtem Produkt und/oder des aggregierten CO2-Fußabdrucks für alle zusammengefügten Produkte in dem Zeitraum ferner auf der Komponenten-CO2-Fußabdruckinformation basiert, die mit Komponenten in den Ausschussprodukten assoziiert ist.

2. Verfahren nach dem vorhergehenden Anspruch, wobei die Montageeinheit eine Montagestation, eine Montagelinie, die mehrere Montagestationen umfasst, oder eine Montagefabrik ist, die mehrere Montagelinien umfasst.

3. Verfahren nach einem der vorhergehenden Ansprüche, das ferner Folgendes umfasst:
Erhalten (232) von Komponenten-CO2-Fußabdruckinformation, die mit einer oder mehreren Komponenten assoziiert ist, die in dem zusammengefügten Produkt zusammengefügt werden sollen;
wobei die Bestimmung des CO2-Fußabdrucks pro zusammengefügtem Produkt und/oder des aggregierten CO2-Fußabdrucks für alle zusammengefügten Produkte in dem Zeitraum ferner auf der Komponenten-CO2-Fußabdruckinformation basiert, die mit Komponenten in den zusammengefügten Produkten assoziiert ist.

4. Verfahren nach einem der vorhergehenden Ansprüche, das ferner Folgendes umfasst:
beim Bestimmen des CO2-Fußabdrucks pro zusammengefügtem Produkt und/oder des aggregierten CO2-Fußabdrucks für alle zusammengefügten Produkte in dem Zeitraum, Anzeigen des CO2-Fußabdrucks pro zusammengefügtem Produkt und/oder des aggregierten CO2-Fußabdrucks für alle zusammengefügten Produkte in dem Zeitraum auf einer Anzeige.

5. Verfahren nach einem der vorhergehenden Ansprüche, das ferner Folgendes umfasst:
für jeden von mehreren Zeiträumen, Durchführen der folgenden Schritte, nachdem ein jeweiliger Zeitraum abgelaufen ist:
Bestimmen einer Anzahl von zusammengefügten Produkten in dem jeweiligen Zeitraum basierend auf den Messdaten, die durch den mindestens einen Produktzählersensor erzeugt werden;
Bestimmen einer zugeführten Energiemenge in dem jeweiligen Zeitraum basierend auf den Messdaten, die durch den mindestens einen Energieversorgungssensor erzeugt werden;
Schätzen einer Menge an Treibhausgas, das in die Atmosphäre abgegeben wird, um die zugeführte Energiemenge in dem jeweiligen Zeitraum basierend auf der Energie-CO2-Fußabdruckinformation zu erzeugen;
Bestimmen eines CO2-Fußabdrucks pro zusammengefügtem Produkt und/oder eines aggregierten CO2-Fußabdrucks für alle zusammengefügten Produkte in dem jeweiligen Zeitraum basierend mindestens auf der Anzahl von zusammengefügten Produkten in dem jeweiligen Zeitraum und auf der Menge an Treibhausgas, das in die Atmosphäre abgegeben wird, um die zugeführte Energiemenge in dem jeweiligen Zeitraum zu erzeugen; und
Anzeigen des CO2-Fußabdrucks pro zusammengefügtem Produkt und/oder des aggregierten CO2-Fußabdrucks für alle zusammengefügten Produkte in dem jeweiligen Zeitraum auf einer Anzeige.

6. Verfahren nach dem vorhergehenden Anspruch, das ferner Folgendes umfasst:
Anzeigen eines Graphen der CO2-Fußabdrücke pro zusammengefügtem Produkt und/oder der aggregierten CO2-Fußabdrücke für alle zusammengefügten Produkte in den mehreren Zeiträumen auf der Anzeige.

7. Ein Überwachungssystem zur Ermittlung des CO2-Fußabdrucks für ein oder mehrere Produkte, die von einer Montageeinheit zusammengebaut werden, wobei das System Folgendes umfasst:
Mittel zum Empfangen von Messdaten, die durch mindestens einen Produktzählersensor erzeugt werden, der konfiguriert ist, eine Anzahl von Produkten, die durch die Montageeinheit zusammengefügt werden, über die Zeit zu erfassen;
Mittel zum Bestimmen einer Anzahl von zusammengefügten Produkten in einem Zeitraum basierend auf den Messdaten, die durch den mindestens einen Produktzählersensor erzeugt werden;
Mittel zum Empfangen von Messdaten, die durch mindestens einen Energieversorgungssensor erzeugt werden, der konfiguriert ist, eine Energiemenge zu messen, die der Montageeinheit über die Zeit zugeführt wird;
Mittel zum Bestimmen einer zugeführten Energiemenge in dem Zeitraum basierend auf den Messdaten, die durch den mindestens einen Energieversorgungssensor erzeugt werden;
Mittel zum Erhalten von Energie-CO2-Fußabdruckinformation, die eine Menge an Treibhausgas darstellt, das in die Atmosphäre abgegeben wird, um die Energiemenge zu erzeugen, die der Montageeinheit zugeführt wird;
Mittel zum Schätzen einer Menge an Treibhausgas, das in die Atmosphäre abgegeben wird, um die zugeführte Energiemenge in dem Zeitraum basierend auf der Energie-CO2-Fußabdruckinformation zu erzeugen; und
Mittel zum Bestimmen eines CO2-Fußabdrucks pro zusammengefügtem Produkt und/oder eines aggregierten CO2-Fußabdrucks für alle zusammengefügten Produkte in dem Zeitraum basierend mindestens auf der Anzahl von zusammengefügten Produkten in dem Zeitraum und auf der Menge an Treibhausgas, das in die Atmosphäre abgegeben wird, um die zugeführte Energiemenge in dem Zeitraum zu erzeugen;
und wobei das Überwachungssystem ferner Folgendes umfasst:
Mittel zum Erhalten von Ausschussproduktinformation, die mit einer Anzahl von Ausschussprodukten über die Zeit assoziiert ist, wobei die Bestimmung des CO2-Fußabdrucks pro zusammengefügtem Produkt und/oder des aggregierten CO2-Fußabdrucks für alle zusammengefügten Produkte in dem Zeitraum ferner auf der Komponenten-CO2-Fußabdruckinformation basiert, die mit Komponenten in den Ausschussprodukten assoziiert ist.

8. Überwachungssystem nach dem vorhergehenden Anspruch, wobei die Montageeinheit eine Montagestation, eine Montagelinie, die mehrere Montagestationen umfasst, oder eine Montagefabrik ist, die mehrere Montagelinien umfasst.

9. Überwachungssystem nach Anspruch 7 oder 8, das ferner Folgendes umfasst:
Mittel zum Erhalten von Komponenten-CO2-Fußabdruckinformation, die mit einer oder mehreren Komponenten assoziiert ist, die in dem zusammengefügten Produkt zusammengefügt werden sollen;
wobei die Bestimmung des CO2-Fußabdrucks pro zusammengefügtem Produkt und/oder des aggregierten CO2-Fußabdrucks für alle zusammengefügten Produkte in dem Zeitraum ferner auf der Komponenten-CO2-Fußabdruckinformation basiert, die mit Komponenten in den zusammengefügten Produkten assoziiert ist.

10. Überwachungssystem nach einem der Ansprüche 7 bis 9, das ferner Folgendes umfasst:
Mittel zum Anzeigen des CO2-Fußabdrucks pro zusammengefügtem Produkt und/oder des aggregierten CO2-Fußabdrucks für alle zusammengefügten Produkte in dem Zeitraum auf einer Anzeige beim Bestimmen des CO2-Fußabdrucks pro zusammengefügtem Produkt und/oder des aggregierten CO2-Fußabdrucks für alle zusammengefügten Produkte in dem Zeitraum.

11. Computerprogramm, das Anweisungen umfasst, die, wenn das Programm durch einen Computer ausgeführt wird, den Computer veranlassen, das Verfahren nach einem der Ansprüche 1 bis 6 auszuführen.

## Revendications

1. Un procédé mis en œuvre sur un système de surveillance, pour déterminer une empreinte carbone pour un ou plusieurs produits assemblés par une unité d'assemblage, le procédé comprenant :
la réception (205) de données de mesure générées par au moins un capteur compteur de produits configuré pour détecter un nombre de produits assemblés dans le temps par l'unité d'assemblage ;
la détermination (210) d'un nombre de produits assemblés dans une période de temps, sur la base des données de mesure générées par l'au moins un capteur compteur de produits ;
la réception (215) de données de mesure générées par au moins un capteur d'alimentation en énergie configuré pour mesurer une quantité d'énergie délivrée dans le temps à l'unité d'assemblage ;
la détermination (220) d'une quantité d'énergie délivrée dans la période de temps, sur la base des données de mesure générées par l'au moins un capteur d'alimentation en énergie ;
l'obtention (225) d'une information d'empreinte carbone énergétique représentant une quantité de gaz à effet de serre libérés dans l'atmosphère pour générer la quantité qui a été délivrée à l'unité d'assemblage ;
l'estimation (230) d'une quantité de gaz à effet de serre libérés dans l'atmosphère pour générer la quantité d'énergie délivrée dans la période de temps, sur la base de l'information d'empreinte carbone énergétique ; et
la détermination (240) d'une empreinte carbone par produit assemblé et/ou d'une empreinte carbone agrégée pour tous les produits assemblés dans la période de temps, sur la base au moins du nombre de produits assemblés dans la période de temps et de la quantité de gaz à effet de serre libérés dans l'atmosphère pour générer la quantité d'énergie délivrée dans la période de temps ;
et le procédé comprenant en outre :
l'obtention (234) d'une information de produits rejetés associée à un nombre de produits rejetés dans le temps, la détermination de l'empreinte carbone par produit assemblé et/ou de l'empreinte carbone agrégée pour tous les produits assemblés étant en outre basée sur l'information d'empreinte carbone de composants associée aux composants dans les produits rejetés.

2. Le procédé de la revendication précédente, dans lequel l'unité d'assemblage est un poste d'assemblage, une ligne d'assemblage comprenant de multiples postes d'assemblage, ou une usine d'assemblage comprenant de multiples lignes d'assemblage.

3. Le procédé de l'une des revendications précédentes, comprenant en outre :
l'obtention (232) d'une information d'empreinte carbone de composants associée à un ou plusieurs composants à assembler dans le produit assemblé ;
dans lequel la détermination de l'empreinte carbone par produit assemblé et/ou de l'empreinte carbone agrégée pour tous les produits assemblés est en outre basée sur l'information d'empreinte carbone de composants associée aux composants dans les produits assemblés.

4. Le procédé de l'une des revendications précédentes, comprenant en outre :
sur détermination de l'empreinte carbone par produit assemblé et/ou de l'empreinte carbone agrégée pour tous les produits assemblés dans la période de temps, l'affichage, sur un afficheur, de l'empreinte carbone par produit assemblé et/ou de l'empreinte carbone agrégée pour tous les produits assemblés dans la période de temps.

5. Le procédé de l'une des revendications précédentes, comprenant en outre :
pour chacune de multiples périodes de temps, l'exécution des étapes suivantes à l'expiration d'une période de temps respective :
la détermination d'un nombre de produits assemblés dans la période de temps respective, sur la base des données de mesure générées par l'au moins un capteur compteur de produits ;
la détermination d'une quantité d'énergie délivrée dans la période de temps respective, sur la base des données de mesure générées par l'au moins un capteur de délivrance d'énergie ;
l'estimation d'une quantité de gaz à effet de serre libérés dans l'atmosphère pour générer la quantité d'énergie délivrée dans la période de temps respective, sur la base de l'information d'empreinte carbone énergétique ;
la détermination d'une empreinte carbone par produit assemblé et/ou d'une empreinte carbone agrégée pour tous les produits assemblés, sur la base au moins du nombre de produits assemblés dans la période de temps respective et de la quantité de gaz à effet de serre libérés dans l'atmosphère pour générer la quantité d'énergie délivrée dans la période de temps respective ; et
l'affichage, sur un afficheur, de l'empreinte carbone par produit assemblé et/ou de l'empreinte carbone agrégée pour tous les produits assemblés.

6. Le procédé de la revendication précédente, comprenant en outre :
l'affichage, sur l'afficheur, d'un graphique des empreintes carbone par produit assemblé et/ou des empreintes carbone agrégées pour tous les produits assemblés pendant les multiples périodes de temps.

7. Un système de surveillance pour déterminer une empreinte carbone pour un ou plusieurs produits assemblés par une unité d'assemblage, le système comprenant :
des moyens de réception de données de mesure générées par au moins un capteur compteur de produits configuré pour détecter un nombre de produits assemblés dans le temps par l'unité d'assemblage ;
des moyens de détermination d'un nombre de produits assemblés dans une période de temps, sur la base des données de mesure générées par l'au moins un capteur compteur de produits ;
des moyens de réception de données de mesure générées par au moins un capteur d'alimentation en énergie configuré pour mesurer une quantité d'énergie délivrée dans le temps à l'unité d'assemblage ;
des moyens de détermination d'une quantité d'énergie délivrée dans la période de temps, sur la base des données de mesure générées par l'au moins un capteur d'alimentation en énergie ;
des moyens d'obtention d'une information d'empreinte carbone énergétique représentant une quantité de gaz à effet de serre libérés dans l'atmosphère pour générer la quantité qui a été délivrée à l'unité d'assemblage ;
des moyens d'estimation d'une quantité de gaz à effet de serre libérés dans l'atmosphère pour générer la quantité d'énergie délivrée dans la période de temps, sur la base de l'information d'empreinte carbone énergétique ; et
des moyens de détermination d'une empreinte carbone par produit assemblé et/ou d'une empreinte carbone agrégée pour tous les produits assemblés dans la période de temps, sur la base au moins du nombre de produits assemblés dans la période de temps et de la quantité de gaz à effet de serre libérés dans l'atmosphère pour générer la quantité d'énergie délivrée dans la période de temps ;
et le système de surveillance comprenant en outre :
des moyens d'obtention d'une information de produits rejetés associée à un nombre de produits rejetés dans le temps, la détermination de l'empreinte carbone par produit assemblé et/ou de l'empreinte carbone agrégée pour tous les produits assemblés étant en outre basée sur l'information d'empreinte carbone de composants associée aux composants dans les produits rejetés.

8. Le système de surveillance de la revendication précédente, dans lequel l'unité d'assemblage est un poste d'assemblage, une ligne d'assemblage comprenant de multiples postes d'assemblage, ou une usine d'assemblage comprenant de multiples lignes d'assemblage.

9. Le système de surveillance de la revendication 7 ou 8, comprenant en outre :
des moyens d'obtention d'une information d'empreinte carbone de composants associée à un ou plusieurs composants à assembler dans le produit assemblé ;
dans lequel la détermination de l'empreinte carbone par produit assemblé et/ou de l'empreinte carbone agrégée pour tous les produits assemblés est en outre basée sur l'information d'empreinte carbone de composants associée aux composants dans les produits assemblés.

10. Le système de surveillance de l'une des revendications 7 à 9, comprenant en outre :
des moyens d'affichage, sur un afficheur, de l'empreinte carbone par produit assemblé et/ou de l'empreinte carbone agrégée pour tous les produits assemblés dans la période de temps, sur détermination de l'empreinte carbone par produit assemblé et/ou de l'empreinte carbone agrégée pour tous les produits assemblés dans la période de temps.

11. Un programme informatique comprenant des instructions qui, lorsque le programme est exécuté par un calculateur, font en sorte que le calculateur mette en œuvre le procédé de l'une des revendications 1 à 6.
